(19) Europäisches Patentamt
European Patent Office
Office européen des brevets

(11) EP 0 916 705 A2

(12) # EUROPEAN PATENT APPLICATION

(43) Date of publication:
**19.05.1999 Bulletin 1999/20**

(51) Int Cl.[6]: **C09D 4/00**

(21) Application number: **98309211.5**

(22) Date of filing: **11.11.1998**

(84) Designated Contracting States:
**AT BE CH CY DE DK ES FI FR GB GR IE IT LI LU MC NL PT SE**
Designated Extension States:
**AL LT LV MK RO SI**

(30) Priority: **14.11.1997 US 65698 P**
**04.03.1998 US 34883**

(71) Applicant: **GENERAL ELECTRIC COMPANY**
**Schenectady, NY 12345 (US)**

(72) Inventor: **Lilly, Kenneth Lee**
**Evansville, Indiana 47712 (US)**

(74) Representative: **Szary, Anne Catherine, Dr. et al**
**London Patent Operation,**
**GE International, Inc.,**
**Essex House,**
**12-13 Essex Street**
**London WC2R 3AA (GB)**

(54) **Thermoplastic coating compositions**

(57) This invention relates to curable coating compositions that may be applied and cured to form thermoplastic coatings. More specifically, this invention relates to curable acrylate coating compositions that may be applied to polycarbonate substrates and cured to form optically transparent, polyacrylate coatings having a refractive index that is closely matched to the refractive index of polycarbonate. Such coatings also may be preferably formulated to provide abrasion, chemical, water vapor and UV resistance, as well as thickness consistency, to the polycarbonate substrate.

EP 0 916 705 A2

## Description

This invention relates to curable coating compositions that may be applied and cured to form thermoplastic coatings. More specifically, this invention relates to curable acrvlate coating compositions that may be applied to polycarbonate substrates and cured to form optically transparent, polyacrylate coatings having a refractive index that is closely matched to the refractive index of polycarbonate. Such coatings also may be preferably formulated to provide abrasion, chemical, water vapor and UV resistance, as well as thickness consistency, to the polycarbonate substrate.

BACKGROUND OF THE INVENTION

Such coating compositions are particularly well-suited for use in optical media applications, such as CD-ROM cards. Coating polymeric resin substrates such as, for example, articles of molded polycarbonate, polyester, polyurethane and the like to improve their resistance to weathering is an accepted procedure. Advantageously, the coatings are comprised of radiation curable polyacrylic or polyacrylic-urethane coatings; see for example the coating descriptions set forth in the U.S. Patents 4,198,465, 4,455,205, 4,477,529, 4,478,876, 4,486,504, and 5,712,324.

In general, the radiation-curable coatings comprise a radiation-curable (cross-linking-polymerizable), polyfunctional acrylate, a photo-initiator compound and an ultra-violet light absorbing compound. The coating, in a fluid form, is applied to the polymeric resin substrate. The coating may be cured in-situ by a technique called "cold casting" by directing radiant energy through the substrate opposite the surface being coated; see for example the description in U.S. Patent 5,227,240 (Tilley et al.) issued July 13, 1993 and incorporated herein by reference thereto.

U.S. Patent No. 5,162,390, discloses weather and abrasion resistant thermoplastic composites having thicknesses of up to one (1) inch or more with improved optical properties. Although such heat curable silicone hard coat formulations could be applied to a variety of thermoplastic substrates, such as polycarbonate or polyester in the form of film or sheet, and although useful results could be obtained employing such heat curable coating compositions, an environmentally unattractive organic solvent was required, see, e.g. Clark, U.S. Pat. No. 4,027,073. In addition, long process times were required to make a satisfactory abrasion and weather resistant composite of such thermoplastic substrate and hard coat.

Abrasion resistant thermoplastic composites having improved optical properties may also be made by effecting the cure of a solvent-less radiation curable coating composition which has been applied onto the surface of a polymeric sheet or film. The cure of the applied coating material can be effected while it is in contact with a smooth surface (cold casting) by directing radiant energy through the substrate opposite the surface being coated. The previously mentioned "cold-casting technique" is further illustrated in U.S. Patent No. 5,468,542, issued to Crouch. Although improved surface characteristics can be achieved with such radiation curable coating compositions, the resulting abrasion resistant thermoplastic film can suffer from reduced weathering resistance unless a latent UV screen is used which does not interfere with the cure of the curable coating composition while it is on the substrate. Suitable latent UV screens include sulfonate esters of hydroxybenzotriazoles, of the type described Olson, U.S. Pat. No. 4,344,830, which is incorporated herein by reference. These latent UV screens can impart improved weathering resistance over extending periods of time, while simultaneously allowing the cure of the radiation curable coating. Although composites of thermoplastic films having thicknesses up to about thirty (30) mils, or sheets having thicknesses of up to about one (1) inch can be made by treating the films or sheets with a curable coating composition and thereafter effecting the cure of the coating composition in the presence of a latent UV screen, experience has shown that latent UV screens often have limited solubility in the coating composition. In addition, these latent UV screens frequently separate from the cured resin after an extended weathering period resulting in a marred, unattractive surface.

It would therefore be desirable to provide solvent-less curable coating compositions which are capable of imparting improved chemical, UV, abrasion and water vapor barrier resistance to a variety of thermoplastic substrates in a relatively short period of time when applied and cured thereon. It also would be desirable to provide compositions of thermoplastic films or sheets having a cured abrasion resistant polyacrylic or polyacrylic-urethane coating having a thickness of about four (4) to twenty-five (25) microns which can contain an effective amount of a conventional instead of a latent UV absorber, and possess superior optical characteristics. Finally, by polishing both sides of such films or sheets, it would be desirable to provide composites of particular utility in optical media applications, such as described in U.S. Patent No. 5,579,296.

SUMMARY OF THE INVENTION

The present invention is based on the discovery that a coating composition comprised of particular organic compounds, photoinitiators and silicone coating solutions may be used to coat thermoplastic substrates such as polycarbonate thereby yielding a coated composite that is particularly suitable for use in optical media applications. More specifically, the present invention relates to a curable coating composition consisting essentially of approximately ninety-eight percent (98%) by weight of an acrylate and two percent (2%) by weight of a photoinitiator. In preferred embodiments, a silicone coating solution is included at up to twenty percent (20%) by weight of the composition.

DETAILED DESCRIPTION OF THE PREFERRED EMBODIMENTS

The acrvlate component of the coating composition may be modified with rigid polarizable structures that are oriented perpendicular to the acrylic polymer backbone. Modifiers such as epoxies, ethers, polyols, and urethanes may be used. More specifically, a brominated epoxy was used to teach these techniques. Using polarization chemistry, the acrylate molecule was modified to increase the refractive index. The goal was to match the refractive index of the PC substrate, which is 1.58, at 650 nm.

The following is an example, whereby one skilled in the art will become capable of applying these principles into various optical applications. Brewster's Law established that the change in refractive index is proportional to the difference in principle strains. The proportionality constant, K, is also called the strainoptic constant. K values for several plastic materials (at room temperature) are supplied in the table. K values are a strong function of temperature.

| Material: | K (strainoptic constant) | Refractive index |
|---|---|---|
| Epoxy | 0.09 | 1.56 |
| PMMA | 0.15 | 1.49 |

Therefore, adding a material with a lower K value increases the refractive index. The refractive index can be increased in the visible region (400 to 900 nm) by adding rigid, polarizable structures perpendicular to the polymer acrylic backbone. One such rigid, polarizable structure is an epoxy. Epoxies contain a reactive functional group, called an oxirane ring. This functional group is rigid due to its ring structure, and polarizable, because it contains oxygen. To further increase the polarization, bromine may be introduced. The oxidation states for bromine and oxygen are -5, and -2, respectively. Therefore, when a brominated epoxy is added to the acrylic polymer backbone, the resulting material has a higher refractive index than both the epoxy-modified acrylic polymer, and the unmodified acrylic polymer.

Illustrative examples of the photoinitiator compounds in the coating compositions include carbonyl compounds such as 1-hydroxy cyclohexyl phenyl ketone, benzoin, benzoin methyl ether, benzoin ethyl ether, benzoin propyl ether, benzoin isobutyl ether, acetoin, butyroin, toluoin, benzil, benzophenone, p-methoxybenzophenone, 2,2-diethoxyacetophenone, α-α-dimethoxy α-phenylacetophenone, methylphenyl glyoxylate, ethylphenyl glyoxylate, 4,4'-bis-(dimethylaminobenzophenone), 2-hydroxy-2-methyl-1-phenyl-1-propanone; sulfur compounds such as tetramethylthiuram monosulfide and tetramethylthiuram disulfide; azo compounds such as azobisisobutyronitrile and azobis-2,4-dimethylvaleronitrile; and peroxide compounds such as benzoyl peroxide and di-tert-butyl peroxide.

Preferred photoinitiator compounds having peak sensitivities between 365-400 nm include thioxanthone photoinitiators and acylophosphine oxide photoinitiators. Specific examples of thioxane photoinitiators include 7-chlorothioxanthone, 2,4-diethylthioxanthone and 2,4-diisopropylthioxanthene. Since use of these thioxanthone photoinitiators may result in a hardened coating tinged in yellow, acylophosphine oxide photoinitiators and 2 hydroxy 2 methyl 1 phenyl-1-propanone, are more preferable. Among the acylophosphine oxide photoinitiators, the more preferred are those represented by the general formula I:

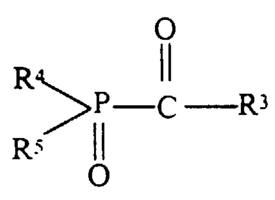

(I)

wherein $R^3$, $R^4$ and $R^5$ each independently represent an alkyl or oxyalkyl group having 1-8 carbon atoms or a phenyl substituted phenyl, benzyl or substituted benzyl group. The most preferred acylophosphine oxide photoinitiators are those represented by Formula I in which $R^3$, $R^4$ and $R^5$ are each independently an oxyalkyl group having 1-9 carbon atoms, a phenyl group or a substituted phenyl group. Specific examples of a particularly preferred phosphone oxide photoinitiators include diphenyl (2,4,6-trimethylbenzoyl) phosphine oxide (hereinafter "Lucerin TPO") and benzoylidiethoxyphosphine oxide.

In addition to the aforementioned components the present coating compositions may also incorporate small amounts of fine particles of an inorganic pigment such as silica, titanium oxide, or aluminum oxide; fine organic particles

of a cross linked polymer or copolymer formed by emulsion or suspension polymerization; a stabilizer such as an antioxidant or polymerization inhibitor; a leveling agent; a defoaming agent; a thickener; an anti-setting agent; a pigment disbursement; lustering agent; and other agents as needed and used in conventional proportions. In general, conventional proportions are within the range of from about 0.5 to 10 percent by weight of the total composition.

In order that those skilled in the art will be better able to practice the present invention, the following examples are given by way of illustration and not by way of limitation. All parts are by weight:

Example 1: Impact of Coating Formulation on Optical Properties

This example is set forth to demonstrate the measurement of refractive index of a coated film by NIR spectroscopy based on fringe calculations. The substrate used was polycarbonate film having a refractive index of 1.58.

The coating thickness was measured by microscope, and the Delta RI was calculated by the following equation.

$$\text{Delta RI} = N/[(\text{Coating Thickness}) * B].$$

Where: N is the number of fringes between W1 and W2.

Delta RI is the refractive index difference between coating and substrate.

$$B \text{ is } [(W2-W1)/W1*W2)].$$

W1 is the first wavelength chosen.
W2 is the second wavelength chosen.

| Sample | Coating Viscosity (cP) | Coating Thickness (mil) | ΔRI | Line Speed (fpm) | MEK Chem (Min) | Taber Abrasion (% haze) |
|---|---|---|---|---|---|---|
| Control HRI mix as supplied | 610 | 1.50 | 0.029 | 40 | 5 | 47.9 |
| HRI mix as supplied | 610 | 1.25 | 0.030 | 30 | 5 | 47.8 |
| HRI mix modified with 10% FCS 100 | 317 | 1.00 | 0.036 | 40 | 30 | 28.5 |

The HRI (high refractive index mix) coating formulation is five percent (5%) wt. Darocur 1173 photoinitiator (2-hydroxy-2-methyl-1-phenyl-1-propanone, (also known as HCPK), made by CIBA, and ninety-five percent (95%) wt. RX-0726 made by UCB Chemicals. RX-0726 is a mixture of a brominated epoxy acrylate oligomer (>50 wt.%) and an acrylate (monofunctional) monomer (<50 wt %). FCS 100 (52 wt % colloidal silica, 42% acrylate monomer) is made by GE Silicones and is a silicone coating solution mixture.

Example 2: It was necessary to control the viscosity of the RX-0726 to obtain the desired Delta RI performance. The viscosity was controlled by adjusting the brominated epoxy acrvlate oligomer content. Mixtures comprising higher percentages of the oligomer are more viscous. The target viscosity is 610 cP. MEK is methvl ethyl ketone.

| Date Received | Viscosity 25°C. | Delta RI | MEK Resistance | Taber Resistance | YI |
|---|---|---|---|---|---|
| 2/1/97 | 610 cP | 0.03 | 10 Min | 50% | 2.6 |
| 2/19/97 | 970 cP | 0.09 | 15 Min | 40% | 1.4 |

Example 3: This example shows that a better balance of optical, chemical, and abrasion resistance is given by the formulation: two percent (2 %) wt. Lucirin TPO photoinitiator made by BASF, 10 percent (10%) wt. FCS100 made by GE Silicones, and eighty-eight percent (88%) wt. RX-0726 made by UCB Chemical.

| FORMULATION | | | | PERFORMANCE | | |
|---|---|---|---|---|---|---|
| Sample | HRI | PI | FCS100 | MEK | Taber | YI |
| 1 | 100% | 0 | 0 | most attack | 39.6% | 1.4 |
| 2 | 96% | 4% | 0 | some attack | 37.4% | 1.3 |
| 3 | 86% | 4% | 10% | least attack | 30.6% | 1.3 |

From the foregoing, it should be clear that the formulation listed in this example, which incorporates an organic compound, photoinitiator and a silicone coating solution, exhibits improved performance characteristics. It will be immediately recognized by those skilled in the art, however, that variations on the above Examples may provide equally improved results and are all within the intended scope of the present invention.

Example 4: The present example shows that best balance of optical, chemical, and abrasion resistance is given by the following formulation: 1 percent (1 %) Irgacure 819 photoinitiator, (phenyl bis (2,4,6 trimethyl benzoyl), 1 percent Darocur 1173 photoinitiator, ten percent (10 %) FCS100, and eighty-eight percent (88 %) RX-0726. The coating surface must be as smooth as possible to prevent laser scattering. Since the reflected laser signal contains the audio and video information from the CD-ROM, if scattering occurs, the information will be lost. It has been determined thru experimentation that the coating finish must have a maximum Rz value of 2.0 microns or less.

| Formulation | Diameter Laser | Diffraction Spots | Finish (Rz) | Comment |
|---|---|---|---|---|
| Control | 0.7 mm | none | Laser only, no sample | |
| 1 | 0.45 | yes | 10 micron | |
| 2 | 0.60 | no | 2 micron | |
| 3 | 0.50 | yes | 6 micron | |
| 4 | 0.50 | yes | 5 micron | |

The tested formulations were as follows: Formulation #1 is = 88 wt% RX0726, 10% FCS100, and 2% Lucirin TPO; Formulation #2 is = 88 wt% RX0726, 10% FCS100, and 1% Darocur 1173, and 1% Irgacure 819; Formulation #3 = 88 wt% RX0726, 10% FCS100, and 2% Darocur 1173; and Formulation #4 is 88 wt% RX0726, 10% FCS100, 1% Lucirin TPO, and 1% Darocur 1173.

From the table above, it is apparent that formulation #2, which incorporates an organic compound, a photoinitiator and a silicone coating solution exhibits improved surface smoothness, and consequently, less laser scattering. While Lucirin TPO and Darocur 1173 provide adequate cross-linking in the bulk, only the combination of Darocur 1173 and Irgacure 819 provide adequate cross-linking in the bulk and surface. If the surface is not completely cross-linked, the finish will be compromised. It will be immediately recognized by those skilled in the art, however, that variations on the above Examples may provide equally improved results and are all within the intended scope of the present invention.

Example 5

In this example, thermally curable coatings are formulated with a binder (polymer and cross linker) and a solvent.

The following examples of one (1) component (ingredients are premixed and require heat to cure) system are given for illustrative purposes only. Coating compositions prepared by mixing the following:

| | |
|---|---|
| 70 wt% | Brominated epoxy acrylate |
| 5 wt% | Carboxylic acid cross linker |
| 25 wt% | Solvent (butyl alcohol, ethanol, or propylene glycol). |

These three alternate solvents were selected specifically for their compatability with polycarbonate. To be effective, a solvent must swell a thermoplastic and provide adhesion sites, but avoid causing degradation. Thus solvents such as butyl acetate, methyl isobutyl ketone, acetone, toluene and mineral spirits would be unsuitable for polycarbonate.

**Claims**

1. A method of coating a thermoplastic substrate comprising applying a curable coating composition onto the thermoplastic substrate and thereafter effecting the cure of the coating composition to produce a coated substrate having superior optical properties, wherein said curable coating composition comprises:

   (a) greater than 75% by weight percent of an acrylate,
   (b) less than 20% weight percent of a silicone coating solution, and
   (c) less than 5% weight percent of a photoinitiator.

2. A method according to claim 1, where the curable coating composition is cured in contact with a rigid smooth surface to impart improved surface characteristics to the resulting article.

3. A method according to claim 1, wherein said acrylate is a brominated epoxy acrylate mixed with an acrylate monomer.

4. A method according to claim 1, wherein said acrylate is modified by a composition selected from the group consisting of epoxies, ethers, polyols and urethanes.

5. A method according to claim 1, wherein said photoinitiator is selected from the group consisting of:

   (a) diethoxyacetophenone,
   (b) Diphenyl (2,4,6-trimethyl benzoyl) phosphine oxide
   (c) 1-Hydroxy Cyclohexyl phenyl ketone
   (d) 2-hydroxy-2-methyl-1-phenyl-1 propanone

6. A thermoplastic composite having superior optical characteristics made according to the method of claim 1.

7. A thermally curable coating composition consisting essentially of:

   (a) greater than 60% by weight of an acrylate;
   (b) less than 10% by weight of a thermally activated crosslinker, and
   (c) less than 30% by weight of an alcohol based solvent.

8. A curable, optically transparent coating composition having an index of refraction that is adapted to match the index of refraction of a polycarbonate substrate, comprising:

   (a) a mixture of curable acrylate moieties, wherein at least one of the acrvlate moities is adapted to promote adhesion to a polycarbonate substrate; and
   (b) an index of refraction modifier that is adapted to alter the refractive index of said mixture of curable acrylate moieties when in a cured state so as to match the index of refraction of a polycarbonate substrate (RI modifier).

9. The coating composition of claim 8, further comprising an abrasion resistance modifier for increasing the abrasion resistance of said acrvlate in a cured state.

10. The coating composition of claim 9, wherein the abrasion resistance modifier is a curable silicone hardcoat.

11. The coating composition of claim 10, wherein the silicone hardcoat comprises a mixture of acrylate, colloidal silica, and polyorganosiloxane.